(19) Europäisches Patentamt
European Patent Office
Office européen des brevets

(11) Veröffentlichungsnummer : **0 066 230**
**B1**

(12) # EUROPÄISCHE PATENTSCHRIFT

(45) Veröffentlichungstag der Patentschrift : **05.03.86**

(51) Int. Cl.⁴ : **C 09 B 55/00**// D06P3/04, C09B45/06

(21) Anmeldenummer : **82104534.1**

(22) Anmeldetag : **25.05.82**

(54) **Asymmetrische 1:2-Chromkomplexfarbstoffe.**

(30) Priorität : **02.06.81 DE 3121923**

(43) Veröffentlichungstag der Anmeldung : **08.12.82 Patentblatt 82/49**

(45) Bekanntmachung des Hinweises auf die Patenterteilung : **05.03.86 Patentblatt 86/10**

(84) Benannte Vertragsstaaten : **CH DE FR GB IT LI**

(56) Entgegenhaltungen :
**EP-A- 0 037 904**
**FR-A- 2 392 087**
**GB-A- 1 197 267**
**US-A- 2 985 646**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Mennicke, Winfried, Dr.**
**Steglitzer Strasse 8**
**D-5090 Leverkusen 1 (DE)**

**EP 0 066 230 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft neue asymmetrische 1 : 2-Chromkomplexfarbstoffe, die in Form der freien Säure der Formel

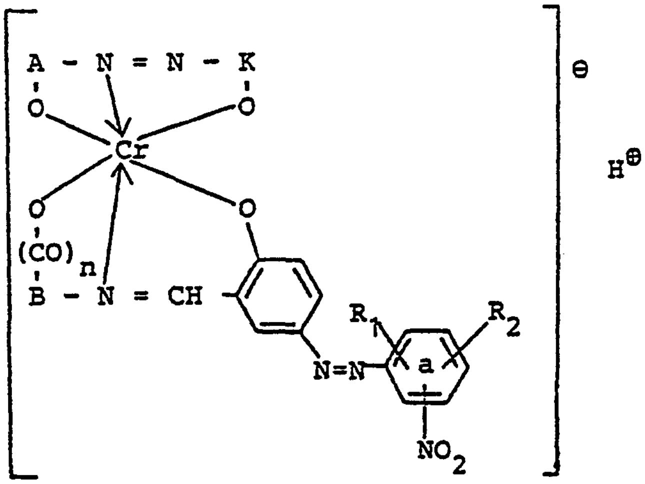

(I)

entsprechen, worin

A = vicinal zweiwertiger Benzol- und Naphthalinrest,

K = Rest eines in o-Stellung zu OH kuppelnden 1- oder 2-Naphthols,

B = vicinal zweiwertiger Benzolrest,

$R^1$ und $R^2$ = Wasserstoff, $SO_3H$, COOH, Sulfonamid, Carbonamid, Alkyl, Trifluormethyl, Alkoxy, Alkylsulfonyl, $NH_2$, $NO_2$, Cl oder Br und

n = 0 oder 1,

wobei die Nitrogruppe des Ringes a in o- oder p-Stellung zur Azogruppe steht.

Die Reste A und B können außer der komplexbildenden Gruppe weitere Substituenten tragen, beispielsweise $SO_3H$, COOH, Sulfonamid, Carbonamid, Alkylsulfonyl, Arylsulfonyl, $NO_2$, Alkyl, Alkoxy, Br, Cl oder Acylamino.

Die Naphthalinreste K können weiter substituiert sein beispielsweise durch $SO_3H$, $NH_2$, Acylamino, Arylamino, Sulfonamid, Acyl, Alkyl, Alkoxy, Alkylsulfonylamino oder Cl.

Bevorzugte Acyl-, Alkyl- und Alkoxygruppen sind solche mit 1-4 C-Atomen, die gegebenenfalls weiter substituiert sein können, beispielsweise durch CN, Cl, OH, $C_1$-$C_4$-Alkoxy, Phenyl.

Bevorzugte Acylaminogruppen sind insbesondere $C_1$-$C_4$-Alkylcarbonylamino, $C_1$-$C_4$-Alkoxycarbonylamino, $C_1$-$C_4$-Alkylsulfonylamino.

Die Sulfonamid- und Carbonamidgruppen können mono- oder disubstituiert sein beispielsweise durch gegebenenfalls substituiertes $C_1$-$C_4$-Alkyl oder durch Aryl, insbesondere gegebenenfalls substituiertes Phenyl.

Bevorzugte Arylreste sind insbesondere gegebenenfalls substituierte Phenylreste mit Substituenten wie Halogen, insbesondere Cl und Br, $NO_2$, $C_1$-$C_4$-Alkoxy, $C_1$-$C_4$-Alkyl.

Bevorzugte Farbstoffe sind solche der Formel

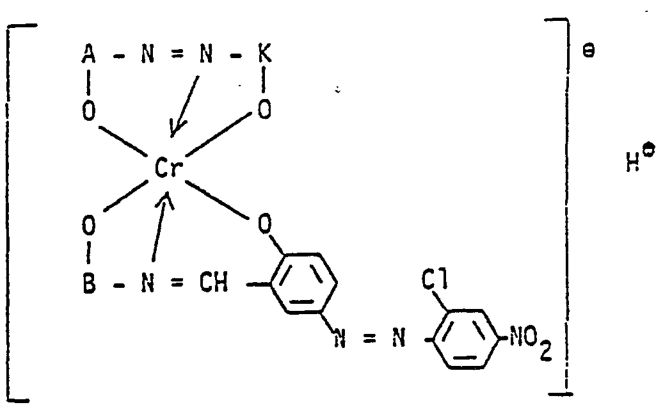

(II)

und

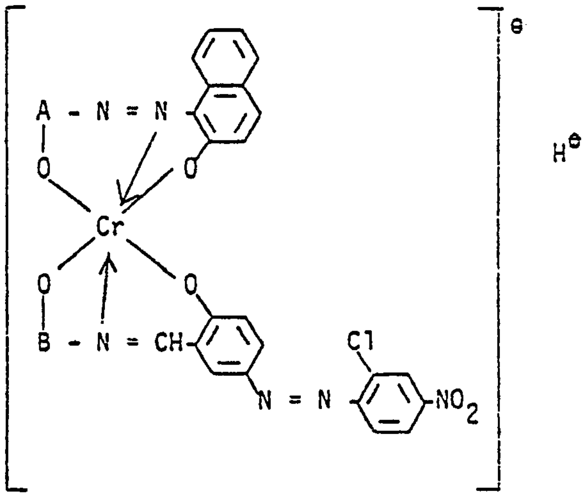

(III)

wobei A, B und K die obengenannte Bedeutung haben. Bevorzugte Farbstoffe II und III sind solche mit einer einzigen Sulfogruppe im Molekül.

Die erfindungsgemäßen Farbstoffe werden erhalten, indem man einen Farbstoff der Formel

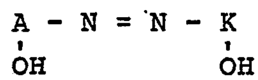

(IV)

oder

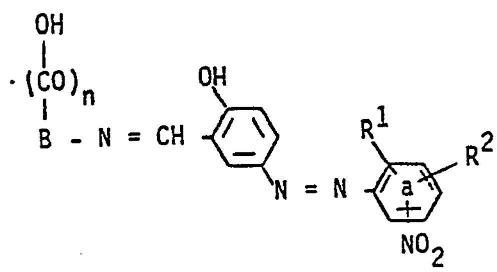

(V)

mit einem chromabgebenden Mittel in den 1 : 1-Chromkomplex überführt und diesen mit dem entsprechenden nichtmetallisierten Farbstoff der Formel (V) bzw. (IV) umsetzt.

Wegen ihrer leichten Bildung können anstelle der Azomethine der Formel (V) auch Gemische aus Aminen der Formel

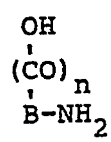

(VI)

und den Aldehyden der Formel

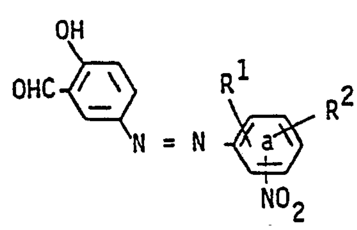

(VII)

eingesetzt werden.

Die Monoazofarbstoffe der Formel (IV) werden in bekannter Weise durch Kuppeln von diazotierten Aminen der Formel

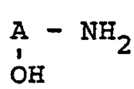

(VIII)

auf Naphthole der Formel

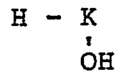 (IX)

erhalten, diejenigen der Formel (VII) durch Kuppeln von diazotierten o- und p-Nitroanilinen der Formel

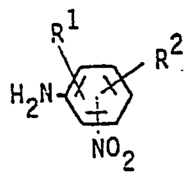 (X)

auf Salicylaldehyd.

Geeignete Diazoverbindungen der Formel (VIII) sind beispielsweise :
2-Amino-1-hydroxybenzol,
4- oder 5-Chlor-2-amino-1-hydroxybenzol,
4,6-Dichlor-2-amino-1-hydroxybenzol,
4- oder 5-Nitro-2-amino-1-hydroxybenzol,
4,6-Dinitro-2-amino-1-hydroxybenzol,
4-Chlor- und 4-Methyl- und 4-Acetamino-6-nitro-2-amino-1-hydroxybenzol,
6-Methyl-, 6-Acetamino- und 6-Chlor-4-nitro-2-amino-1-hydroxybenzol,
4-Chlor-5-nitro-2-amino-1-hydroxybenzol,
4- oder 5-Methyl-2-amino-1-hydroxybenzol,
4-Methoxy-2-amino-1-hydroxybenzol,
2-Amino-1-hydroxybenzol-4- oder 5-methylsulfon,
2-Amino-1-hydroxybenzol-4- oder 5-phenylsulfon,
2-Amino-1-hydroxybenzol-4-ethyl-, -4-chlormethyl- und -4-butylsulfon,
2-Amino-1-hydroxybenzol-4- oder -5-sulfonamid,
2-Amino-1-hydroxybenzol-4- oder -5-sulfomethylamid,
2-Amino-1-hydroxybenzol-4- oder -5-sulfodimethylamid,
2-Amino-1-hydroxybenzol-4- oder -5-sulfanilid,
4-Nitro-2-amino-1-hydroxybenzol-5- oder -6-sulfonamid,
2-Amino-1-hydroxybenzol-4-sulfanthranilid,
2-Amino-1-hydroxybenzol-4- oder -5-sulfonsäure,
4-Nitro-2-amino-1-hydroxybenzol-5- oder -6-sulfonsäure,
5-Nitro- oder 6-Nitro-2-amino-1-hydroxybenzol-4-sulfonsäure,
6-Chlor-2-amino-1-hydroxybenzol-4-sulfonsäure,
4-Chlor-2-amino-1-hydroxybenzol-6-sulfonsäure,
4-Methyl-2-amino-1-hydroxybenzol-5- oder -6-sulfonsäure,
2-Amino-1-hydroxynaphthalin-4-sulfonsäure,
1-Amino-2-hydroxynaphthalin-4-sulfonsäure,
6-Nitro-, 6-Methyl- oder 6-Brom-1-amino-2-hydroxynaphthalin-4-sulfonsäure.

Geeignete Naphthole der Formel (IX) sind beispielsweise :
2-Naphthol,
1,3- oder 1,5-Dihydroxynaphthalin,
6-Brom- oder 6-Methoxy-2-naphthol,
2-Naphthol-6-sulfonamid oder -6-β-hydroxyethylsulfon,
2-Naphthol-3-, -4-, -5-, -6-, -7- oder -8-sulfonsäure,
2-Naphthol-3-, -4-, -5-, -6-, -7- oder -8-sulfonamid,
4-Acetyl- oder 6-Acetyl-2-naphthol,
1-Acetylamino-, 1-Propionylamino-, 1-Benzoylamino-,
1-Carbomethoxyamino-, 1-Carboethoxyamino- oder 1-Methylsulfonylamino-7-naphthol,
2-Naphthol-3,6-disulfonsäure,
2-Naphthol-5,7-disulfonsäure,
1-Naphthol,
1-Naphthol-3-, -4-, -5-, -6-, -7- oder -8-sulfonsäure,
1-Naphthol-3-, -4-, -5-, -6-, -7- oder -8-sulfonamid,
5,8-Dichlor-1-naphthol,
5-Chlor-1-naphthol,
8-Acetamino-1-naphthol-4-sulfonsäure,
2-(4-Methoxyphenylamino)-5-naphthol-7-sulfonsäure,
2-Amino-8-naphthol-6-sulfonsäure,
4-Methyl-1-naphthol.

Beispiele für Amine der Formel (VI) sind alle von Benzol abgeleiteten Amine der Formel (VIII), weiterhin

2-Aminobenzoesäure-4- oder -5-sulfonsäure,
2-Aminobenzoesäure-4- oder -5-sulfonamid,
4-, 5- oder 6-Chlor-2-aminobenzoesäure,
3,5-Dichlor-2-aminobenzoesäure,
4- oder 5-Nitro-2-aminobenzoesäure.

Geeignete o- und p-Nitroaniline der Formel (X) sind 4-Nitroanilin, 2-Chlor-4-nitroanilin, 3-Chlor-4-nitroanilin, 2-Chlor-4-nitro-5-methoxyanilin, 2-Methoxy-4-nitro-5-chloranilin, 2,5-Dichlor-4-nitroanilin, 2,6-Dichlor-4-nitroanilin, 2-Chlor-4-nitro-6-methoxyanilin, 2-Methyl-4-nitro-5-chloranilin, 2-Methyl-4-nitroanilin, 2-Brom-4-nitroanilin, 2-Methylsulfonyl-4-nitroanilin, 4-Nitroanilin-2-carbonsäure, 4-Nitroanilin-3-carbonsäure, 2-Methoxy-4-nitroanilin, 2,5-Dimethoxy-4-nitroanilin, 2,5-Diethoxy-4-nitroanilin, 4-Nitroanilin-2-sulfonsäure, 4-Nitroanilin-3-sulfonsäure, 2-Methoxy-4-nitroanilin-5-sulfonsäure, 2-Methoxy-4-nitroanilin-6-sulfonsäure, 4-Nitroanilin-2-sulfonamid, 2,4-Dinitroanilin, 3-Amino-4-nitroanilin, 2,4-Dinitroanilin-6-sulfonsäure, 2,6-Dinitroanilin-4-sulfonsäure, 4-Trifluormethyl-2-nitroanilin, 2-Nitro-4-chloranilin, 2-Nitro-4-methylanilin, 2-Nitro-4-methoxy-anilin, 2-Nitroanilin-4-carbonsäure, 2-Nitroanilin-4-sulfonsäure, 2-Nitro-5-chloranilin, 2-Nitro-6-methylanilin, 2-Nitro-4,6-dichloranilin, 2-Nitro-4,6-dimethylanilin.

Die Überführung der Azofarbstoffe der Formel (IV) oder der Azomethinfarbstoffe der Formel (V) in den Chrom-1 : 1-Komplex erfolgt nach üblichen, an sich bekannten Methoden, indem man z. B. den metallfreien Farbstoff mit einem Salz des 3-wertigen Chroms, wie Chromchlorid, Chromfluorid, Chromsulfat oder Chromformiat im wäßrigen Medium bei Siedetemperatur oder gegebenenfalls höherer Temperatur umsetzt. Man kann die Metallisierung auch in Gegenwart von organischen Lösungsmitteln oder in organischen Lösungsmitteln allein vornehmen, beispielsweise in Alkoholen, Etheralkoholen oder Ketonen. Besonders glatt verläuft die Reaktion unter Ausschluß von Wasser, indem man beispielsweise nach dem Verfahren der Deutschen Offenlegungsschrift 26 05 574 das Reaktionswasser während der Chromierung in Etheralkoholen destillativ entfernt.

Die Umsetzung der Chrom-1 : 1-Komplexe der Farbstoffe der Formel (IV) oder (V) mit den metallfreien Farbstoffen der Formel (V) bzw. (IV) oder die Umsetzung der von den Azofarbstoffen der Formel (IV) abgeleiteten Chrom-1 : 1-Komplexe mit Gemischen aus den Aminen der Formel (VI) und den Aldehyden der Formel (VII) erfolgt zweckmäßig in alkalischem bis schwach saurem Medium bei gewöhnlicher oder erhöhter Temperatur, vorzugsweise im Bereich von 50-100 °C. Auch hier kann die Umsetzung in wäßriger Lösung in Gegenwart eines Lösungsmittels oder in einem Lösungsmittel allein durchgeführt werden, wobei niedere Alkohole, wie Ethanol, Ketone, wie Ethylmethylketon, Glykole, Etheralkohole, wie Ethyl- oder Butylglykol, und Carbonamide, wie Formamid oder Dimethylformamid, in Frage kommen. Die Reaktionsteilnehmer werden bevorzugt in stöchiometrischen Mengen eingesetzt; ein Überschuß an metallhaltigem Farbstoff wirkt sich im allgemeinen weniger nachteilig aus als ein Überschuß an metallfreiem Farbstoff.

Die bei der Anlagerung des metallfreien an den metallhaltigen Farbstoff freiwerdende Säure wird durch Zusatz alkalisch wirkender Mittel abgefangen, beispielsweise durch Zusatz von Hydroxiden oder Carbonaten von Alkalimetallen, wie Lithium-, Natrium-, Kaliumhydroxid oder -carbonat, von Ammoniak oder organischen Aminen, wie Mono-, Di-, Triethylamin, Mono-, Di oder Triethanolamin, oder von Tetraalkylammoniumhydroxiden, wie Tetramethylammoniumhydroxid. Vorzugsweise setzt man die alkalisch wirkenden Mittel so zu, daß die Reaktion bei einem konstanten pH-Wert abläuft.

Am Ende der Reaktion liegen die erfindungsgemäßen 1 : 2-Chromkomplexfarbstoffe als Salz der Komplexsäure und der an ihr gebundenen $SO_3H$-Gruppen mit den oben erwähnten alkalisch wirkenden Mitteln vor, beispielsweise als Alkalisalze bei Verwendung von Alkalihydroxiden oder -carbonaten oder als Ammoniumsalze bei Verwendung von Ammoniak oder Aminen. Zur Neutralisation können auch Amine Verwendung finden, die mit den 1 : 2-Chromkomplexfarbstoffen in Wasser schwer lösliche Salze bilden, so daß sie nur unter Zusatz von organischen Lösungsmitteln oder in diesen Lösungsmitteln allein gelöst werden können. Derartige Amine sind beispielsweise N-Ethyl-N-hexylamin, Dodecylamin, Oleylamin, Cyclohexylamin, N,N-Dicyclohexylamin, N,N'-Diphenylguanidin oder N,N'-Ditolylguanidin.

Die so hergestellten 1 : 2-Chromkomplexe, die in der sauren Form den Farbstoffen der Formel (I) entsprechen, können durch Ansäuern, Aussalzen mit Alkalisalzen oder Eindampfen isoliert und mit den üblichen Hilfs- und Stellmitteln zu wasserlöslichen Präparationen verarbeitet werden, sei es zu Pulvern, zu Granulaten mit einer Korngröße von mindestens 20μ oder zu kaltwasserlöslichen und kaltdispergierbaren Zubereitungen.

Die Zubereitung zu flüssigen Präparationen unter Verwendung von organischen Lösungsmitteln gegebenenfalls im Gemisch mit Wasser und gegebenenfalls unter Zusatz von Lösungsvermittlern, wie beispielsweise Harnstoff, ist ebenfalls möglich und insofern empfehlenswert, als man die Synthese der 1 : 2-Chromkomplexe oder einen Teil dieser Synthese und die Herstellung der Farbstofflösungen in einem Topf ohne Zwischenisolierungen vollziehen kann. Besonders vorteilhaft ist das Verfahren der Deutschen Offenlegungsschrift 2 443 483, bei dem man u. a. den metallfreien Farbstoff in hydroxylgruppenhaltigen Lösungsmitteln in Gegenwart von alkalisch wirkenden Lithiumsalzen an den metallhaltigen Farbstoff anlagert und dabei gleichzeitig lagerstabile konzentrierte Farbstofflösungen erhält. Flüssige Farbstoffzubereitungen sind auch durch Flüssig-Flüssig-Extraktionen möglich, indem man, wie beispielsweise in der Europäischen Patentveröffentlichung 24 609 beschrieben, in einer Lösung aus Wasser und einem Etheralkohol durch Zusatz von anorganischen Salzen eine Phasentrennung durchführt und die den organischen Farbstoff enthaltende Phase abtrennt.

Die 1 : 2-Chromkomplexe der Formel (I), die aufgrund der enthaltenen Kationen in Wasser schwer und in organischen Lösungsmitteln gut löslich sind, können zum Färben von organischen Flüssigkeiten, Harzen oder Lakken, von Holzbeizen oder Kugelschreibertinten verwendet werden.

Die 1 : 2-Chromkomplexe der Formel (I), die aufgrund der enthaltenen Kationen in Wasser gut löslich sind, eignen sich zum Färben und Bedrucken der verschiedensten Stoffe, vor allem zum Färben von natürlichen oder synthetischen stickstoffhaltigen Materialien, wie Wolle, Seide, Leder, Polyamid- und Polyurethanfaser. Sie sind vor allem zum Färben aus schwach alkalischem, neutralem oder schwach saurem, z. B. essigsaurem, Bade geeignet. Man erhält gleichmäßige Färbungen in meist gelbbraunen bis dunkelbraunen Nuancen mit guten Licht- und Gebrauchsechtheiten.

Die Farbstoffe, die keine $SO_3H$-Gruppe enthalten und im allgemeinen schwer wasserlöslich sind, lassen sich in Form einer flüssigen Zubereitung bevorzugt zum Sprühfärben von Leder verwenden.

Die flüssigen Farbstoffzubereitungen von Farbstoffen mit einer $SO_3H$-Gruppe eignen sich besonders zum Färben von Leder auf Durchlauf-Mehrzweckmaschinen beispielsweise vom Typ MULTIMA, ein Verfahren, bei dem sich die erfindungsgemäßen Farbstoffe durch ein gutes Durchfärbevermögen, eine gute Bindung zum Substrat und eine gute Wassertropfenechtheit auszeichnen.

Beispiel 1

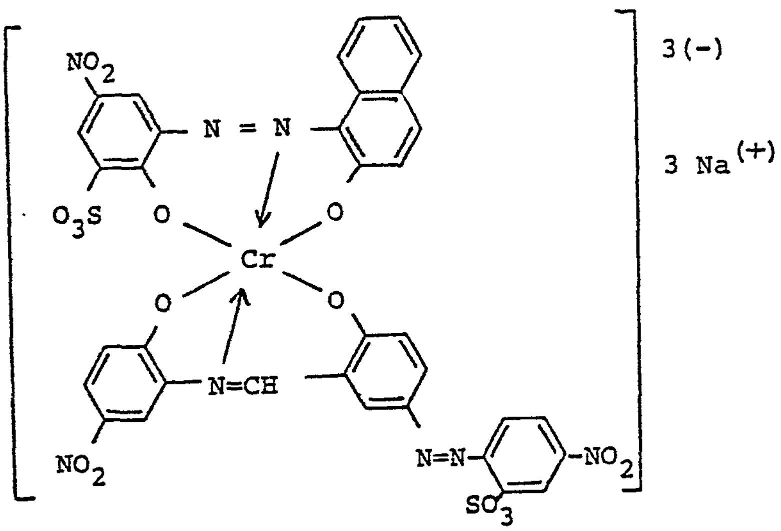

38,9 g des Monoazofarbstoffs aus diazotierter 4-Nitro-2-amino-1-hydroxybenzol-6-sulfonsäure und 2-Naphthol werden in 500 ml Ethylenglykolmonoethylether mit 26,65 g $CrCl_3 \cdot 6\ H_2O$ ca. 2 Stunden unter Rückfluß erhitzt, bis die Bildung des Chrom-1 : 1-Komplexes beendet ist. Man läßt die Lösung auf 80 °C abkühlen und setzt nacheinander 15,4 g 4-Nitro-2-amino-1-hydroxybenzol, 35,1 g Monoazofarbstoff aus Salicylaldehyd und diazotierter 4-Nitroanilin-2-sulfonsäure und ca. 60 ml 40 %iger Natronlauge zu. Man hält die Temperatur weiterhin auf 80 °C und läßt die Natronlauge so zutropfen, daß sich der pH im Bereich von 7 bis 8 bewegt. Nach etwa einer Stunde, wenn keine Natronlauge mehr verbraucht wird, ist die Anlagerung an den Chrom-1 : 1-Komplex beendet. Der entstandene unsymmetrische Chrom-1 : 2-Komplex wird mit gesättigter Natriumchloridlösung gefällt, abfiltriert und getrocknet. Er stellt ein braunes Pulver dar, das Leder, Wolle und Polyamid in gelbbraunen Tönen von guten Echtheiten färbt.

(Siehe Figur Seite 7 f.)

Beispiel 2

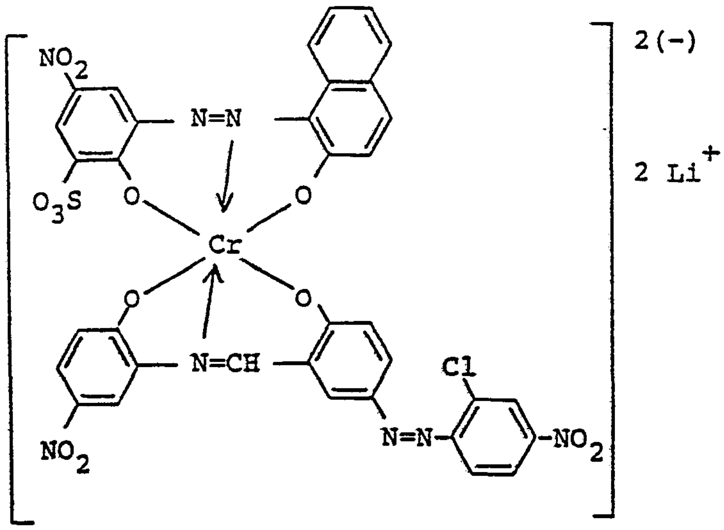

38,9 g des Kupplungsproduktes aus diazotierter 4-Nitro-2-amino-1-hydroxybenzol-6-sulfonsäure und 2-Naphthol werden in 400 ml Ethylenglykolmonoethylether mit 26,65 g $CrCl_3 \cdot 6\ H_2O$ durch zwei- bis dreistündiges Erhitzen bei 125 °C in den Chrom-1 : 1-Komplex umgewandelt. Nach Abkühlen auf 80 °C werden 15,4 g 4-Nitro-2-amino-1-hydroxybenzol und die feuchte Paste von 30,6 g Kupplungsprodukt aus diazotiertem 2-Chlor-4-nitroanilin und Salicylaldehyd zugesetzt. Man erwärmt weiterhin auf 80 °C und hält den pH durch portionsweise Zugabe von ca. 17 g $LiOH \cdot H_2O$ im Bereich von 7 bis 8. Nach etwa einer halben Stunde sind die Reaktionspartner zum Chrommischkomplex zusammengetreten. Man läßt auf Raumtemperatur abkühlen, filtriert von geringen Salzrückständen ab und erhält eine lagerstabile, konzentrierte tiefbraune Farbstofflösung. Die Lösung ergibt auf der MULTIMA Färbemaschine gelbbraune Lederfärbungen mit guter Farbstoffbindung und guter Lichtechtheit.

Beispiel 3

Ersetzt man in Beispiel 1 die 4-Nitroanilin-2-sulfonsäure durch die entsprechenden Nitroaniline, so erhält man die asymmetrischen 1 : 2-Chromkomplexe der Formel (XI). Es sind dunkelbraune Pulver, die auf Leder, Wolle und Polyamid gelbbraune bis olivbraune Färbungen mit guten Licht- und Gebrauchsechtheiten liefern.

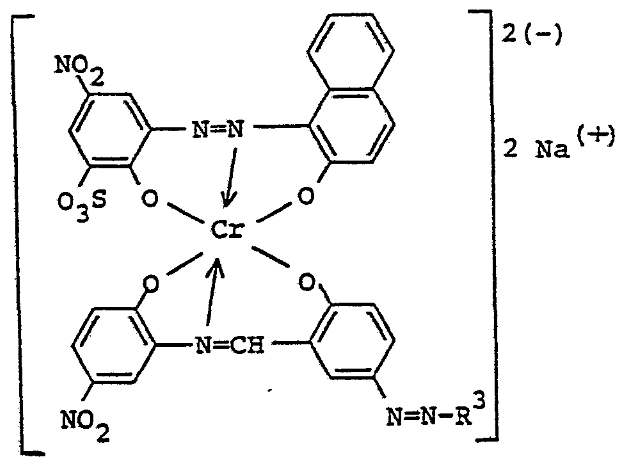

(XI)

$R^3$ =

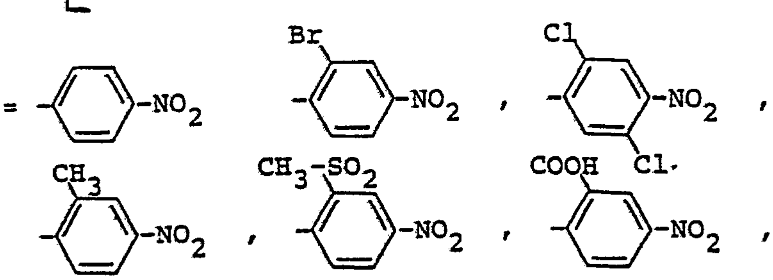

(Fortsetzung)

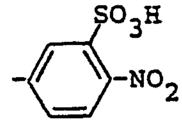 , 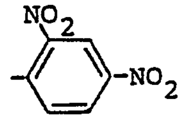 , 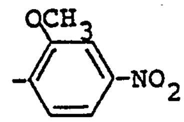 ,

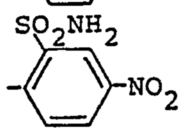 , 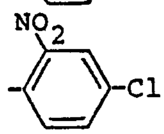 , 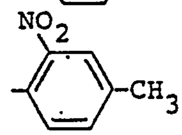 ,

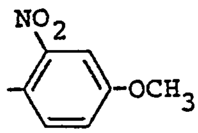 , 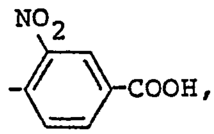 , 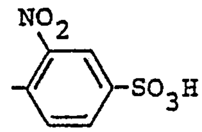 ,

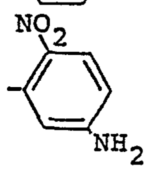

Beispiel 4

Ersetzt man in Beispiel 2 4-Nitro-2-amino-1-hydroxybenzol durch die entsprechenden o-Aminophenole oder o-Aminobenzoesäure, so erhält man lagerstabile tiefbraune Lösungen von Chrommischkomplexen der Formel (XII). Die Farbstoffe dringen tief in Leder ein unter Bildung von lichtechten gelbbraunen Färbungen.

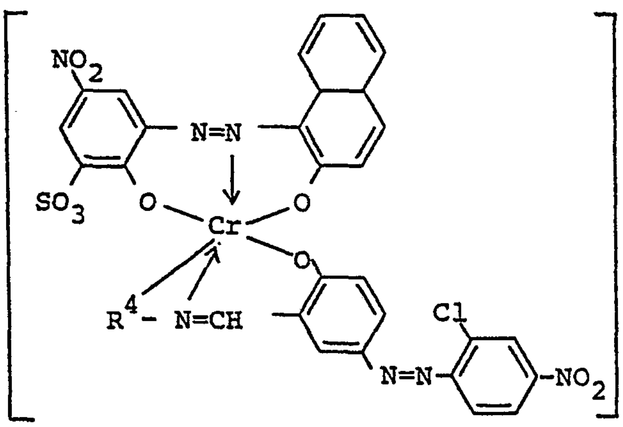 2(−) 2 Li(+) (XII)

$-R^4- =$ 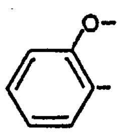 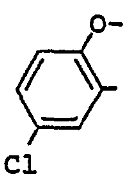 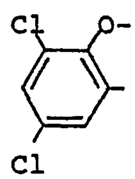

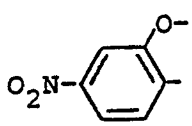 , 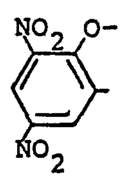 , 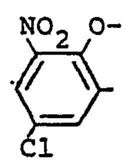 ,

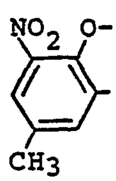 , 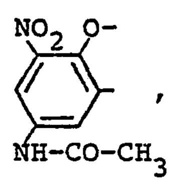 , 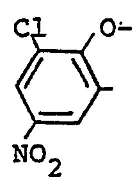 ,

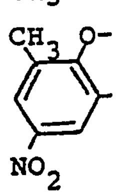 , 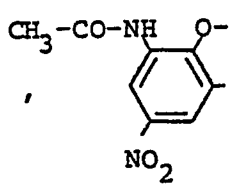 , 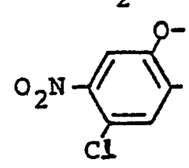 ,

(Fortsetzung)

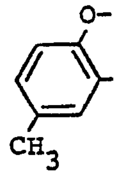 , 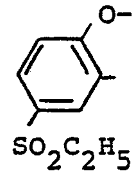 , 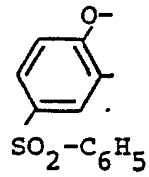 ,

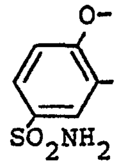 , 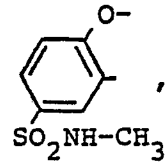 , 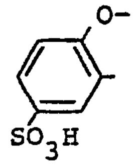 ,

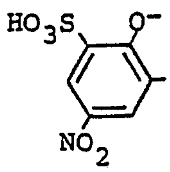 , 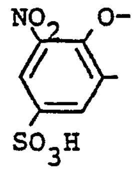 , 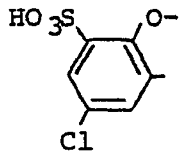 ,

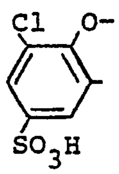 , 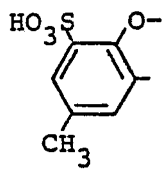 , 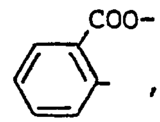 ,

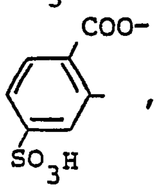 , 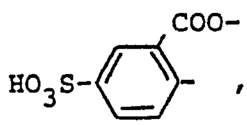 , 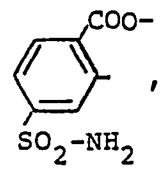 ,

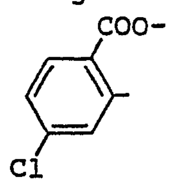 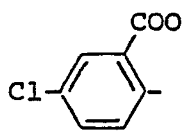 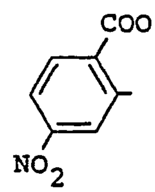

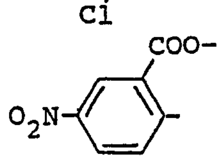

Beispiel 5

Tauscht man in Beispiel 1 die 4-Nitroanilin-2-sulfonsäure gegen die o- und p-Nitroaniline des Beispiels 3 und 4-Nitro-2-amino-1-hydroxybenzol gegen die o-Aminophenole und o-Aminobenzoesäuren des Beispiels 4 aus, so gelangt man zu Chrommischkomplexen der Formel

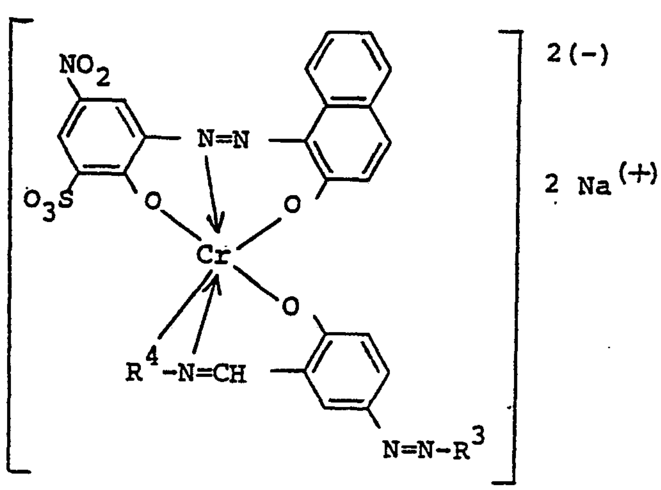

(XIII)

worin $R^3$— und —$R^4$— die in den Beispielen 3 und 4 angegebene Bedeutung haben und $R^3$ auch für

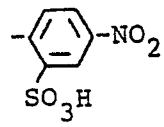

steht.

Die Farbstoffe stellen nach dem Isolieren und Trocknen tiefbraune Pulver dar, die Leder, Wolle und Polyamidfasern in gelbbraunen bis olivbraunen Tönen färben.

Beispiel 6

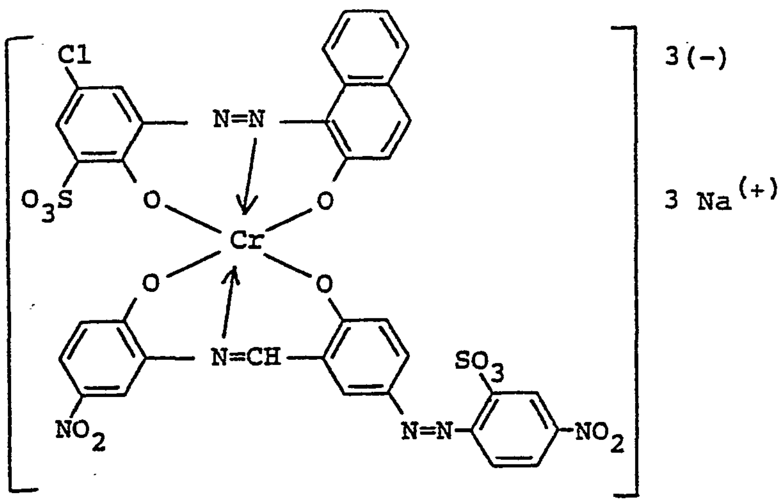

37,85 g des Monoazofarbstoffes aus diazotierter 4-Chlor-2-amino-1-hydroxybenzol-6-sulfonsäure und 2-Naphthol werden zusammen mit 26,65 g $CrCl_3 \cdot 6\ H_2O$ 6 Stunden lang bei 140 °C in 500 ml Wasser in geschlossener Apparatur erhitzt. Nach Abkühlen auf Raumtemperatur saugt man den gebildeten Chrom-1 : 1-Komplex ab und suspendiert ihn in 1 Liter Wasser. Die Suspension wird mit 15,4 g 4-Nitro-2-amino-1-hydroxybenzol und mit 35,1 g Monoazofarbstoff aus diazotierter 4-Nitroanilin-2-sulfonsäure und Salicylaldehyd versetzt und auf 80-90° erwärmt. Bei dieser Temperatur läßt man insgesamt etwa 120 ml 20 %ige Natronlauge so zutropfen, daß stets ein pH von 7-8 vorliegt. Nach etwa 2 Studen, wenn keine Ausgangsverbindungen mehr nachweisbar sind, wird der Chrommischkomplex durch Zusatz von 200 g Salz gefällt, abgesaugt und getrocknet. Das resultierende schwarzbraune Pulver färbt Wolle, Polyamid und Leder in schwach rötlich braunen Nuancen.

Beispiel 7

Eine rötlich braune lichtechte Lederfärbung mit gut haftendem Farbstoff erhält man mit der Lösung des folgenden Chrommischkomplexes

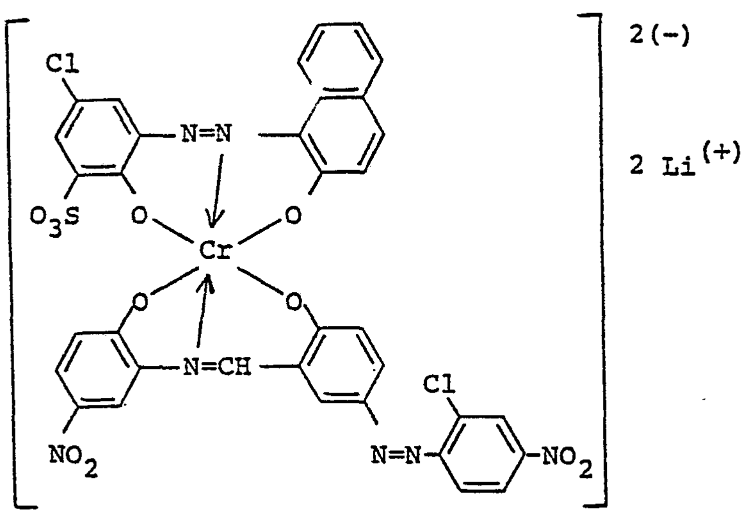

herstellbar durch Umsetzung von 37,85 g Kupplungsprodukt aus 4-Chlor-2-amino-1-hydroxybenzol-6-sulfonsäure und 2-Naphthol mit 26,65 g $CrCl_3 \cdot 6\ H_2O$ in 400 ml Ethylenglykolmonoethylether bei 125 °C und nachfolgende Reaktion mit 15,4 g 4-Nitro-2-amino-1-hydroxybenzol und 30,6 g Kupplungsprodukt aus diazotiertem 2-Chlor-4-nitroanilin und Salicylaldehyd in Gegenwart von $LiOH \cdot H_2O$ bei pH 7-8 und bei 80 °C.

Lederfärbungen mit ähnlichen Eigenschaften erzielt man mit den Farbstoffen der folgenden Beispiele :

Beispiel 8

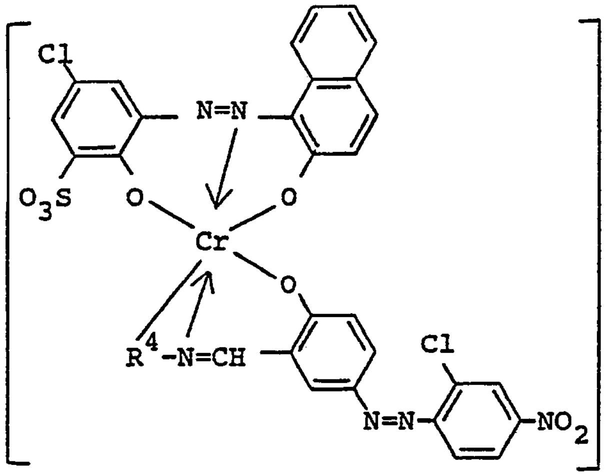

2(-)

$2\ Li^{(+)}$

rotstichig braun

—$R^4$— = —$R^4$— des Beispiels 4.

Beispiel 9

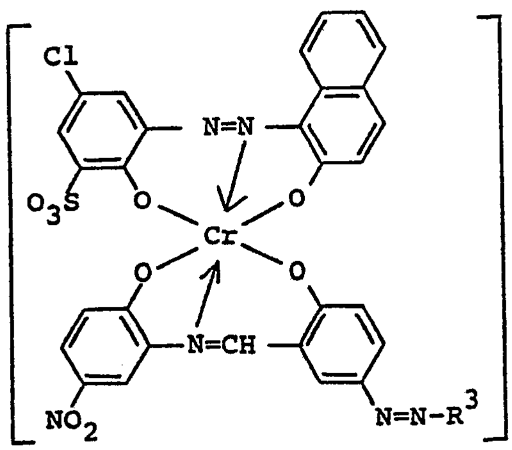

2(-)

$2\ Na^{+}$

rotstichig braun

$R^3$— = $R^3$— des Beispiels 3.

Beispiel 10

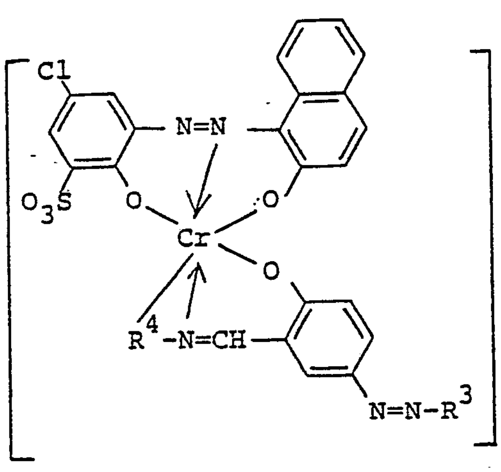

2(-)

$2\ Na^{(+)}$

rotstichig braun

$R^3$— = $R^3$— des Bsp. 3 und

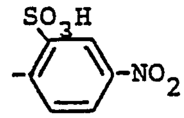

—$R^4$— = —$R^4$— des Bsp. 4.

Beispiel 11

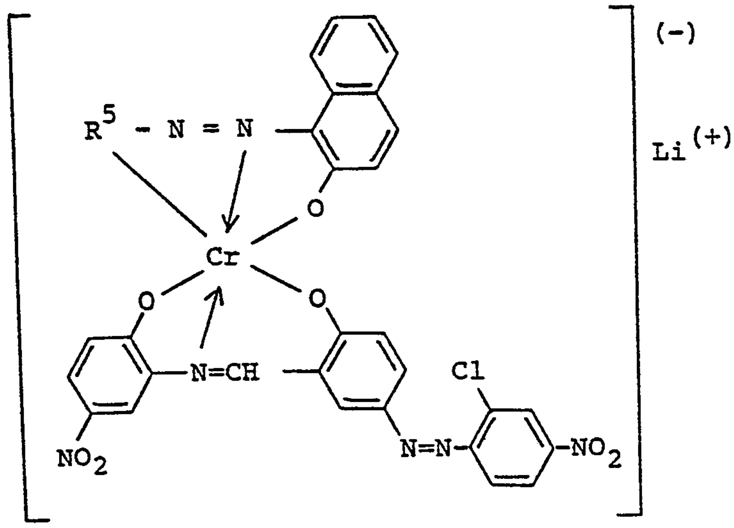

$-R^5- =$

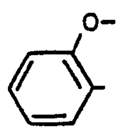 , 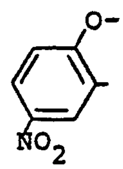 , 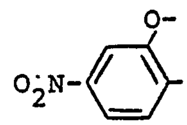 ,

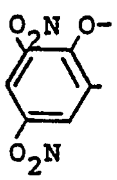 , 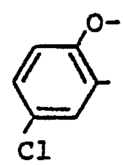 , 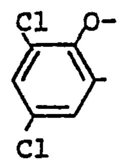 ,

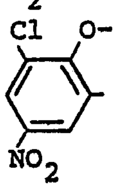 , 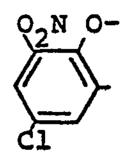 , 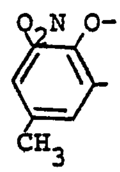 ,

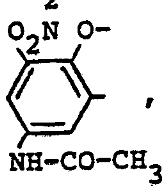 , 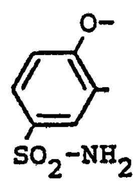 , 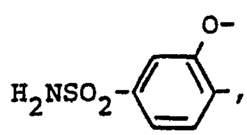 ,

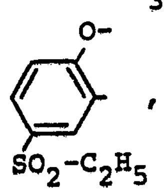 , 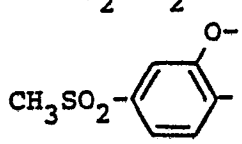 , 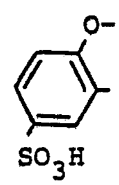

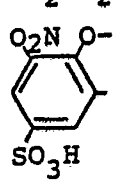 , 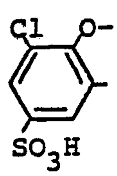 , 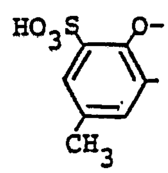

(Fortsetzung)

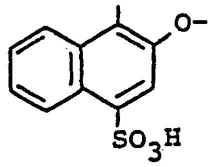
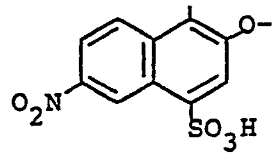

gelbbraun bis blaustichig dunkelbraun

Beispiel 12

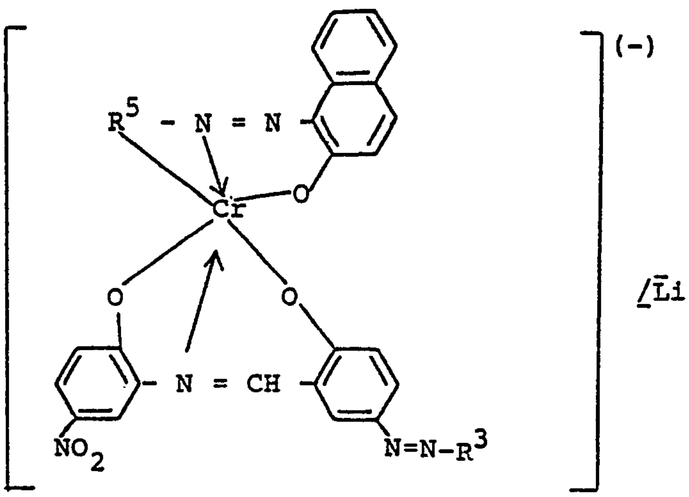

/Li, Na oder K/$^{(+)}$

$R^3$— = $R^3$— des Beispiels 3 sowie

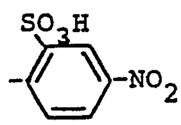

—$R^5$— = —$R^5$— des Beispiels 11

braun

Beispiel 13

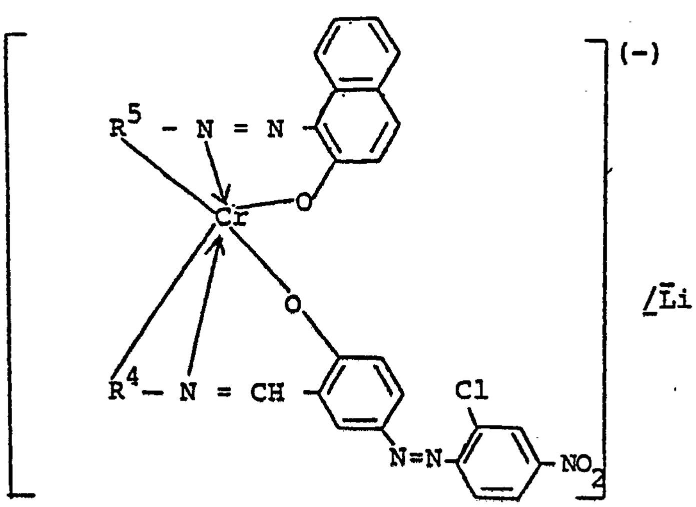

/Li, Na oder K/$^{(+)}$

—$R^4$— = —$R^4$— des Beispiels 4
—$R^5$— = —$R^5$— des Beispiels 11

braun

Beispiel 14

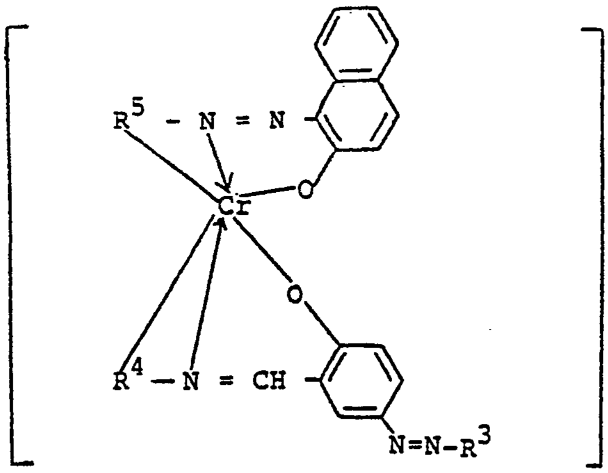

$^{(-)}$ [Li, Na oder K]$^{(+)}$

$R^3$— = $R^3$ des Beispiels 3 und

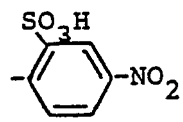

—$R^4$— = —$R^4$— des Beispiels 4
—$R^5$— = —$R^5$— des Beispiels 11

braun

Beispiel 15

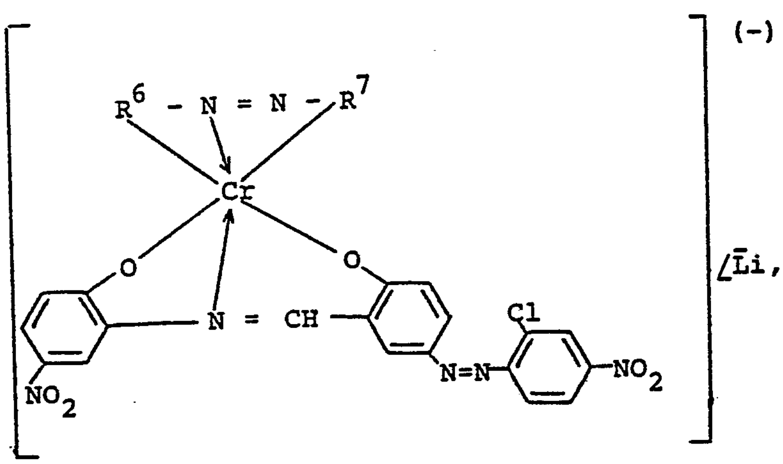

$^{(-)}$ [Li, Na oder K]$^{(+)}$

$-R^6-$ =

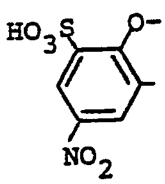

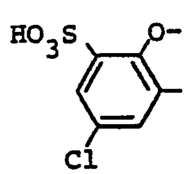

$-R^7-$ =

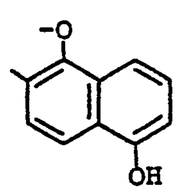

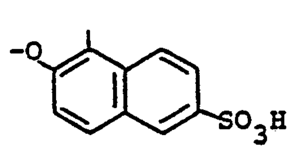

(Fortsetzung)

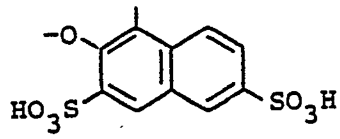

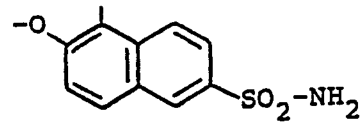

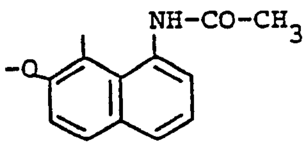

,

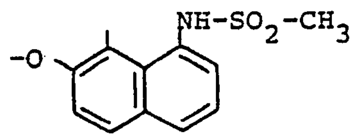

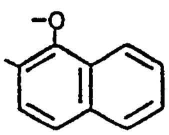

,

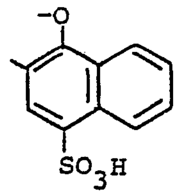

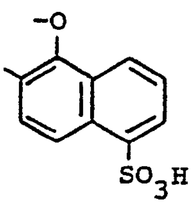

,

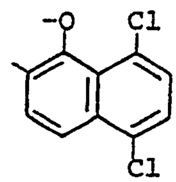

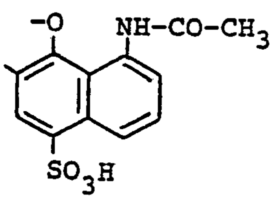

,

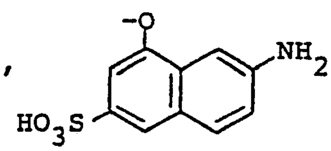

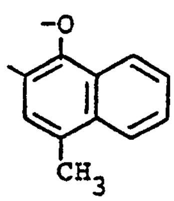

,

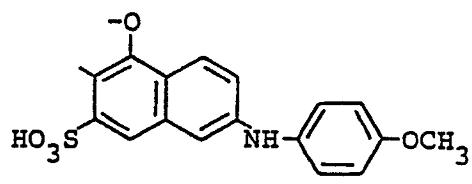

Beispiel 16

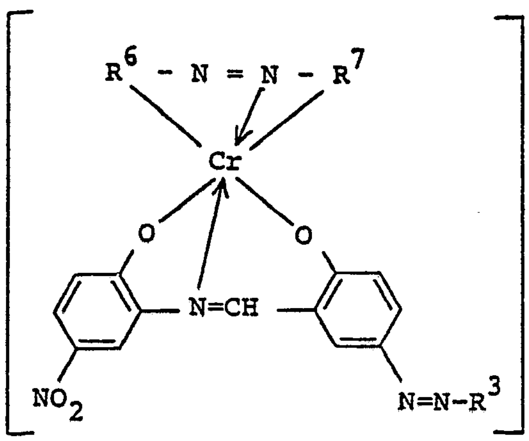

(-)

[Li, Na oder K] (+)

$R^3$— = $R^3$— des Beispiels 3 sowie

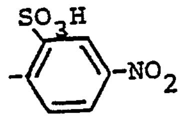

—$R^6$— = —$R^6$— des Beispiels 15
—$R^7$— = —$R^7$— des Beispiels 15

rotbraun bis schwarzbraun

Beispiel 17

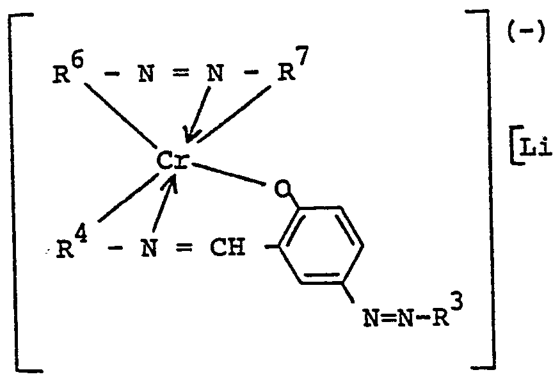

[Li, Na oder K]$^{(+)}$

$R^3$— = $R^3$— des Beispiels 3 sowie

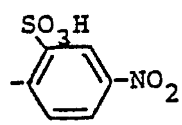

und

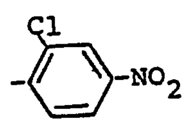

—$R^4$— = —$R^4$— des Beispiels 4
—$R^6$— = —$R^6$— des Beispiels 15
—$R^7$— = —$R^7$— des Beispiels 15

rotbraun bis schwarzbraun

Beispiel 18

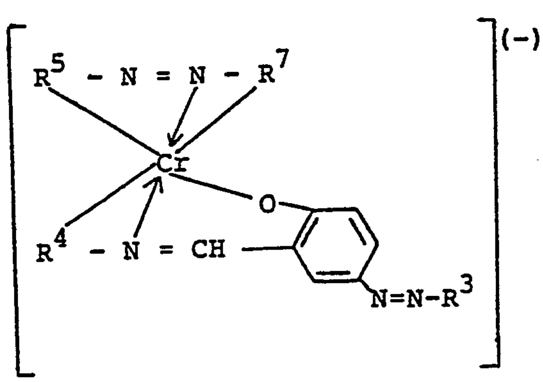

[Li, Na oder K]$^{(+)}$

$R^3$— = $R^3$— des Beispiels 3 und

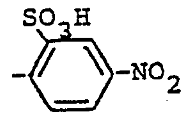

und

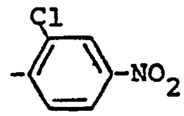

—$R^4$— = —$R^4$— des Beispiels 4 und

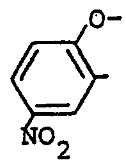

—$R^5$— = —$R^5$— des Beispiels 11
—$R^7$— = —$R^7$— des Beispiels 15

rotbraun bis blaustichig dunkelbraun

**Patentansprüche**

1. Asymmetrische 1 : 2-Chromkomplexfarbstoffe, die in Form der freien Säure der Formel

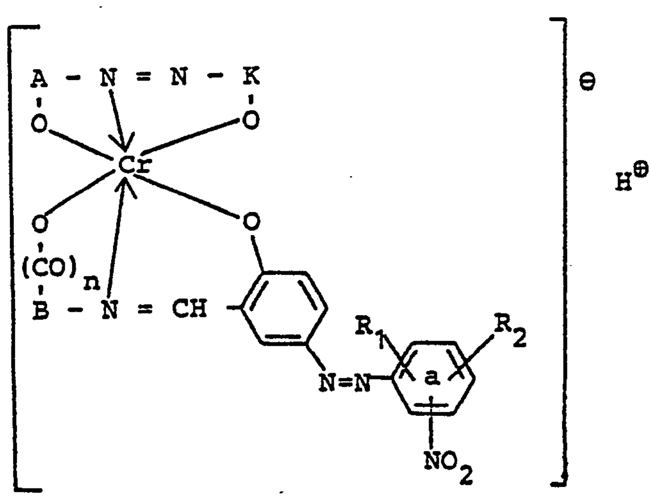

entsprechen, worin
A = vicinal zweiwertiger Benzol- oder Naphthalinrest,
K = Rest eines in o-Stellung zu OH kuppelnden 1- oder 2-Naphthols,
B = vicinal zweiwertiger Benzolrest,
$R^1$ und $R^2$ = Wasserstoff, $SO_3H$, COOH, Sulfonamid, Carbonamid, Alkyl, Trifluormethyl, Alkoxy, Alkylsulfonyl, $NH_2$, $NO_2$, Cl oder Br und
n = 0 oder 1,
wobei die Nitrogruppe des Ringes a in o- oder p-Stellung zur Azogruppe steht.

2. Farbstoffe des Anspruchs 1 der Formel

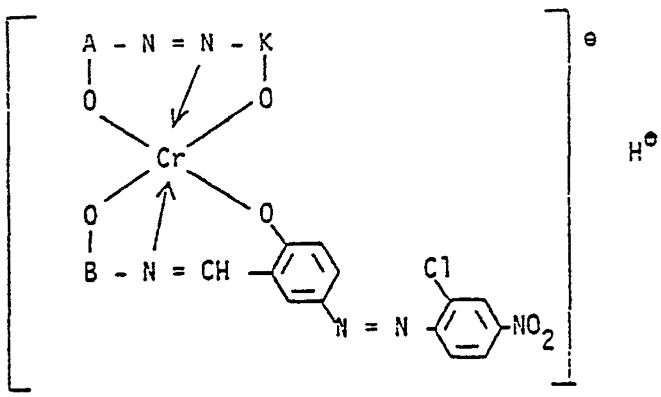

3. Farbstoffe des Anspruchs 1 der Formel

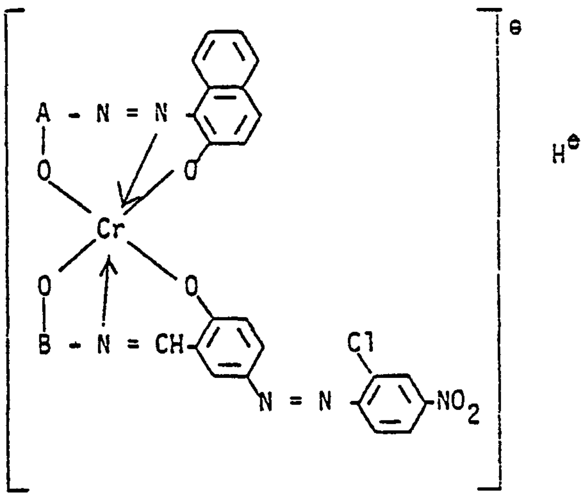

4. Farbstoffe der Ansprüche 1-3 mit einer Sulfogruppe.

5. Verwendung der Farbstoffe der Ansprüche 1-4 zum Färben stickstoffhaltiger Materialien, organischer Flüssigkeiten und Harze.

**Claims**

1. Asymmetrical 1 : 2 chromium complex dyestuffs which in the form of the free acid correspond to the formula

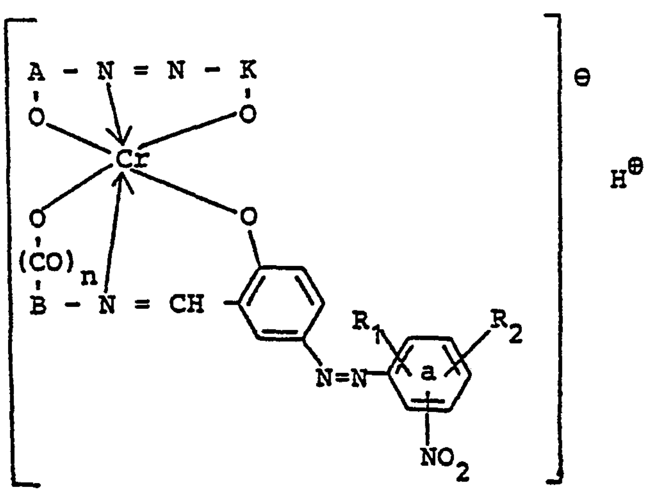

wherein

A denotes a vicinal bivalent benzene or naphthalene radical,

K denotes the radical of a 1- or 2-Naphthol to be coupled in the o-position relative to OH,

B denotes a vicinal bivalent benzene radical,

$R^1$ and $R^2$ denote hydrogen, $SO_3H$, COOH, sulphonamide, carbonamide, alkyl, trifluoromethyl, alkoxy, alkylsulphonyl, $NH_2$, $NO_2$, Cl or Br and

n denotes 0 or 1, and

the nitro group of the ring a is in the o- or p-position relative to the azo group.

2. Dyestuffs according to Claim 1, of the formula

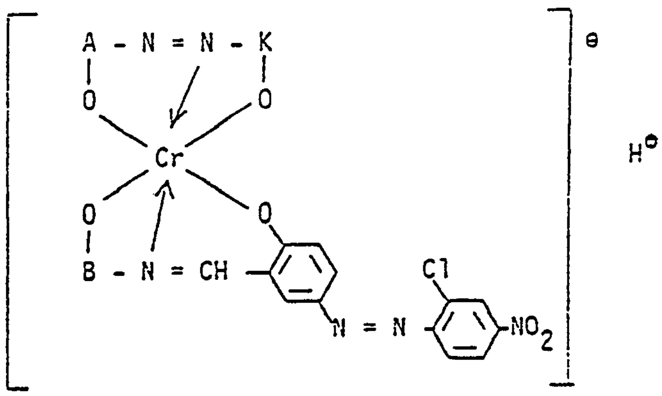

3. Dyestuffs according to Claim 1, of the formula

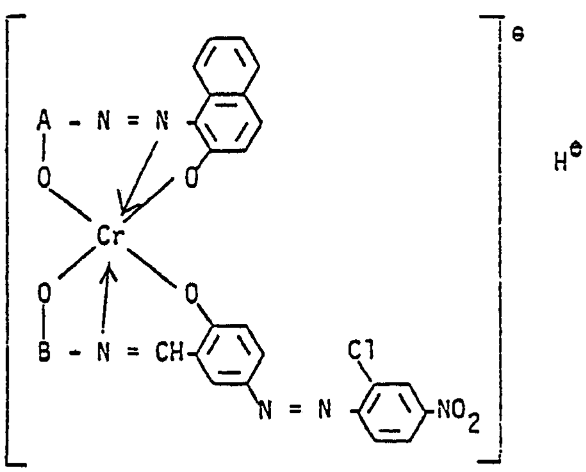

4. Dyestuffs according to Claims 1-3, having one sulpho group.

5. Use of dyestuffs according to Claims 1-4, for dyeing/colouring nitrogen-containing materials, organic liquids and resins.

**Revendications**

1. Colorants complexes de chrome 1 : 2 asymétriques qui, à l'état d'acides libres, répondent à la formule :

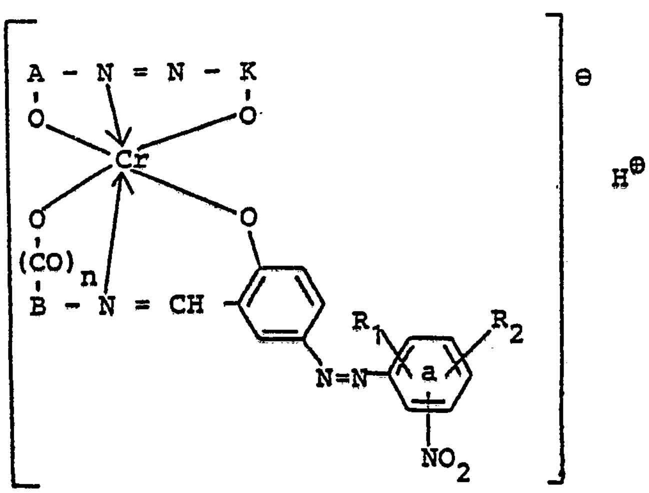

dans laquelle :

A = reste benzénique ou naphtalénique divalent vicinal,

K = reste d'un 1- ou 2-naphtol copulant en position ortho par rapport à OH,

B = reste benzénique divalent vicinal,

$R^1$ et $R^2$ = hydrogène, $SO_3H$, COOH, sulfonamide, carboxamide, alkyle, trifluorométhyle, alcoxy, alkylsulfonyle, $NH_2$, $NO_2$, Cl ou Br et

n = 0 ou 1,

le groupe nitro du cycle a étant en position ortho ou para par rapport au groupe azo.

2. Colorants de la revendication 1 de formule

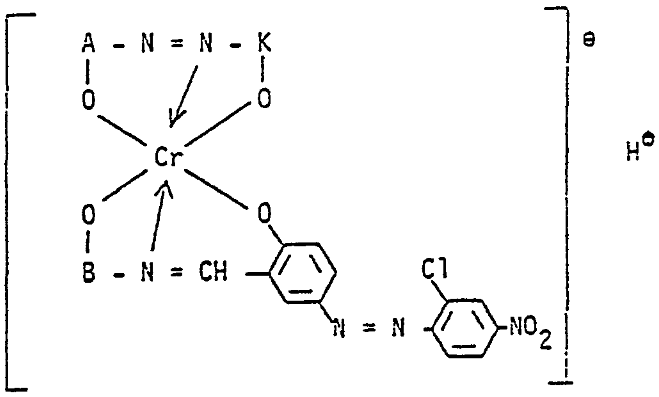

3. Colorants de la revendication 1 de formule

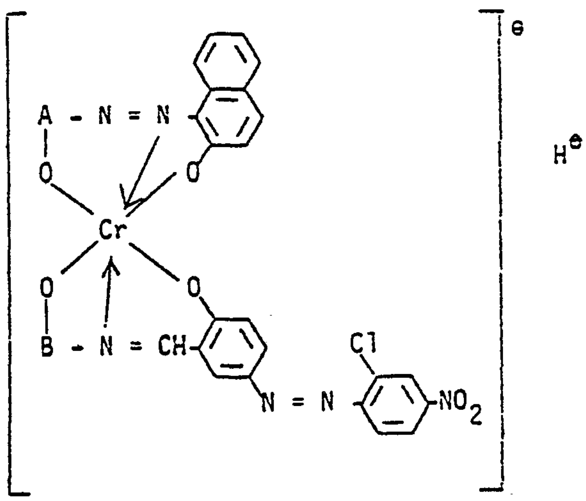

4. Colorants des revendications 1 à 3 portant un groupe sulfo.

5. Colorants des revendications 1 à 4 pour la teinture de matières azotées, de liquides organiques et de résines.